# FASCICULE DE BREVET EUROPEEN

(11) **EP 0 797 024 B1**
(45) Date de publication et mention de la délivrance du brevet: **21.12.2005**
(21) Numéro de dépôt: 97104490.4
(22) Date de dépôt: 14.03.1997
(51) Int. Cl.: F16F 15/139, F16F 15/134

(54) **Volant amortisseur, notamment pour véhicule automobile**
Dämpfendes Schwungrad, insbesondere für Kraftfahrzeuge
Damping flywheel, especially for motor vehicles

(30) Priorité: 14.03.1996 FR 9603231; 28.03.1996 FR 9603887; 14.06.1996 FR 9607435
(43) Date de publication de la demande: 24.09.1997
(73) Titulaire: VALEO EMBRAYAGES s.a.s., 80009 Amiens Cedex 1 (FR)
(72) Inventeur: Mokdad, Ayman, 93400 Saint-ouen (FR); Bochot, Jean-Claude, 77410 Claye-Souilly (FR); Duclos, Didier, 77330 Ozoir-La-Ferriere (FR)
(74) Mandataire: Lemaire, Marc

(56) Documents cités:
- WO-A-94/27062
- FR-A- 2 675 872
- FR-A- 2 728 322
- US-A- 4 767 380

## Description

La présente invention concerne un volant amortisseur, notamment pour véhicule automobile.

L'invention concerne plus particulièrement un volant amortisseur, comportant deux masses coaxiales montées mobiles l'une par rapport à l'autre à l'encontre, d'une part, de moyens élastiques comportant au moins un organe élastique intervenant globalement radialement entre lesdites masses et monté à articulation sur l'une et l'autre de celles-ci, et, d'autre part, de moyens de frottement à action axiale, dans lequel l'une des masses, dite première masse, est propre à être calée en rotation sur un arbre menant, tandis que l'autre des masses, dite seconde masse, constitue le plateau de réaction d'un embrayage, les moyens de frottement étant implantés axialement entre les deux masses et présentant au moins une rondelle de frottement, dite première rondelle de frottement, propre à être entraînée en rotation, éventuellement après rattrapage d'un jeu, par l'une des masses et à coopérer en frottement avec au moins une face de frottement solidaire en rotation de l'autre des masses, ledit au moins un organe élastique étant monté à articulation sur la première masse par l'intermédiaire d'un premier axe et sur la seconde masse par l'intermédiaire d'un second axe.

Une telle disposition est par exemple décrite dans le document EP-A-0 745 196 présentant un état de la technique selon l'article 54(3) et (4) CBE.

Elle présente l'avantage de proposer une conception des moyens de frottement qui en simplifie l'assemblage et réduit l'encombrement axial.

Par ailleurs, comme on le sait, il est intéressant pour amortir les vibrations de créer un frottement permanent, généralement faible, pour amortir les vibrations dans la plage du ralenti moteur, et, au-delà de cette plage de ralenti, dans le régime de marche du véhicule de créer un frottement de plus grande intensité.

La présente invention a pour but de résoudre ce problème tout en conservant les avantages de la disposition antérieure ci-dessus, le volant restant d'une grande simplicité en ayant un nombre de pièces réduites.

Ainsi, selon l'invention, un volant tel que ci-dessus est caractérisé par le fait que les moyens de frottement présentent une seconde rondelle de frottement disposée transversalement globalement au droit de la première rondelle de frottement et des moyens d'engrènement interviennent en rotation entre la première et la seconde rondelles de frottement, ladite seconde rondelle de frottement étant adaptée à coopérer en frottement avec au moins une face de frottement solidaire de ladite l'autre des masses.

Grâce à l'invention, les moyens de frottement sont axialement compacts et les coûts de fabrication sont réduits, tout en ayant un bon amortissement des vibrations, tant pour la plage de ralenti, que pour le régime de marche du véhicule.

Avantageusement, ladite l'une des masses est la seconde masse et la au moins une face de frottement est solidaire en rotation de la première masse.

De préférence, chaque rondelle de frottement est propre à être serrée axialement par une rondelle d'application soumise à l'action d'une rondelle élastique à action axiale ; et dans un mode de réalisation la charge de la rondelle élastique associée à la seconde rondelle de frottement est inférieure à la charge de la rondelle élastique associée à la première rondelle de frottement. Dans d'autres formes de réalisation c'est l'inverse.

Avantageusement, les moyens élastiques sont montés à articulation sur la seconde masse à l'aide d'un second axe porté par la seconde masse et lesdits seconds axes sont fixés sur une rondelle d'orientation transversale permettant la formation d'un sous-ensemble avec lesdits axes et facilitant la fabrication.

De préférence, les rondelles de frottement sont placées axialement entre la première masse et les moyens élastiques.

Avantageusement, les seconds axes sont implantés radialement au-dessus d'ouvertures prévues dans la seconde masse pour le passage d'outils de vissage des vis de fixation destinées à la fixation du volant amortisseur sur son arbre menant.

De préférence, les deux masses sont montées mobiles l'une par rapport à l'autre, à l'aide d'un palier interposé radialement entre un moyeu solidaire de la première masse et un alésage interne de la seconde masse, et le palier est implanté radialement en dessous desdites ouvertures et les moyens de frottement s'étendent radialement au-dessus des vis de fixation.

Avantageusement, chaque second axe comporte une partie médiane recevant à rotation les moyens élastiques qui se prolonge axialement par un tronçon de diamètre réduit traversant un trou de la rondelle et faisant saillie axialement pour fixation du second axe sur la rondelle par réalisation d'une tête sertie, ladite portion médiane se prolongeant, à l'opposé, d'une collerette suivie d'une portion d'extrémité dont le bord est serti sur la seconde masse pour solidarisation du second axe avec ladite seconde masse.

En variante, chaque second axe comprend un corps cylindrique recevant à rotation les moyens élastiques qui se prolonge axialement par un canon de diamètre réduit traversant un trou de la rondelle, le second axe étant percé d'un alésage d'extrémité, au droit du canon et d'une partie du corps, qui se prolonge selon un autre alésage de diamètre légèrement supérieur au précédent en sorte qu'entre les deux est définie une portée transversale contre laquelle est matée la queue d'un rivet introduite dans l'alésage d'extrémité, la tête dudit rivet étant appliquée contre la face de la rondelle qui est tournée vers la première masse.

De préférence, le corps du second axe se prolonge en direction de la seconde masse selon une collerette d'appui reçue dans un lamage de la seconde masse et la portion d'extrémité du corps, au-delà de ladite collerette d'appui, est reçue dans des trous de la seconde masse, une vis étant vissée dans un alésage fileté intérieurement par lequel ledit autre alésage débouche à l'extérieur.

Avantageusement, la première rondelle de frottement entraîne en rotation la seconde rondelle de frottement grâce à des moyens d'engrènement que portent en vis-à-vis la première et la seconde rondelles de frottement. Dans une forme de réalisation les rondelles de frottement sont placées axialement entre la rondelle et la première masse et sont associées des rondelles d'application qui portent respectivement des pattes axiales pour leur entraînement en rotation par la première masse, lesquelles pattes axiales coopérant avec des logements ménagés dans la première masse.

En variante les pattes des rondelles d'application coopèrent avec des logements ménagés dans une pièce, telle qu'une plaque, solidaire de la première masse.

Avantageusement, la rondelle présente à sa périphérie externe une série de dents séparées par des échancrures en forme d'encoches dans lesquelles sont reçues des pattes d'entraînement d'orientation radiale interne que présente la première rondelle de frottement.

De préférence, la seconde rondelle de frottement est implantée radialement en dessous de la première rondelle de frottement et un couvercle d'hystérésis, solidaire de la première masse, entourant circonférentiellement la première rondelle de frottement, présente un retour transversal sur lequel est amenée à prendre appui la rondelle élastique à action axiale associée qui agit sur la première rondelle de frottement par l'intermédiaire de la rondelle d'application associée qui porte à sa périphérie externe des pattes qui coopèrent avec des dents du couvercle d'hystérésis.

De préférence, la seconde rondelle de frottement est solidaire de la rondelle grâce à des pions axiaux qui coopèrent avec des trous de la rondelle.

Avantageusement, la seconde rondelle de frottement est implantée axialement entre la rondelle qui porte les seconds axes et les moyens élastiques ; la seconde rondelle de frottement est soumise à l'action d'une rondelle élastique à action axiale qui prend appui sur un rebord annulaire transversal de la première rondelle de frottement ; en variante, la seconde rondelle de frottement est soumise à l'action d'une rondelle élastique à action axiale constituée par le retour transversal du couvercle d'hystérésis.

Avantageusement, la seconde rondelle de frottement est implantée axialement entre ladite rondelle et la première masse ; la seconde rondelle de frottement est soumise à l'action d'une rondelle élastique prenant appui sur la première masse et ayant des doigts axiaux s'étendant dans les passages de la première masse.

Avantageusement, une rondelle support, solidarisée par sa périphérie extérieure au couvercle d'hystérésis est placée axialement entre la première masse et les moyens de frottement en offrant une face de frottement à la première rondelle de frottement.

De préférence, la rondelle élastique à l'action de laquelle est soumise la seconde rondelle de frottement fait partie de la rondelle support.

La description qui va suivre illustre l'invention en regard des dessins annexés dans lesquels :
- la figure 1 est une vue en coupe axiale d'un volant amortisseur selon l'invention ;
- la figure 2 est une vue montrant les moyens élastiques, à plus grande échelle, du volant de la figure 1 ;
- la figure 3 est une vue à plus grande échelle de la partie inférieure de la figure 1 ;
- la figure 4 est une vue partielle analogue à la figure 1 montrant une variante de volant selon l'invention ;
- la figure 5 est une vue partielle à plus grande échelle d'un sous-ensemble du volant de la figure 4 ;
- les figures 6 et 7 sont des vues agrandies des bulles VI et VII de la figure 4, respectivement.
- la figure 8 est analogue à la figure 6 et correspond à une variante ;
- les figures 9 et 10 sont analogues aux figures 4 et 5 et correspondent à une autre variante ;
- les figures 11 à 13 sont des vues partielles analogues à la figure 3 et correspondent chacune à une autre variante ;
- les figures 14 à 16 sont des vues analogues aux figures 1 à 3 pour encore un autre exemple de réalisation ;
- les figures 17 à 19 sont des vues analogues à la figure 16 pour encore d'autres exemples de réalisation.

Sur ces figures est illustré un volant amortisseur, dénommé usuellement double volant amortisseur, pour véhicules automobiles et les mêmes références seront utilisés pour les éléments communs.

Ce volant amortisseur comporte deux parties coaxiales 1, 2 ou masses montées mobiles l'une par rapport à l'autre à l'encontre de moyens élastiques 3 globalement à action radiale.

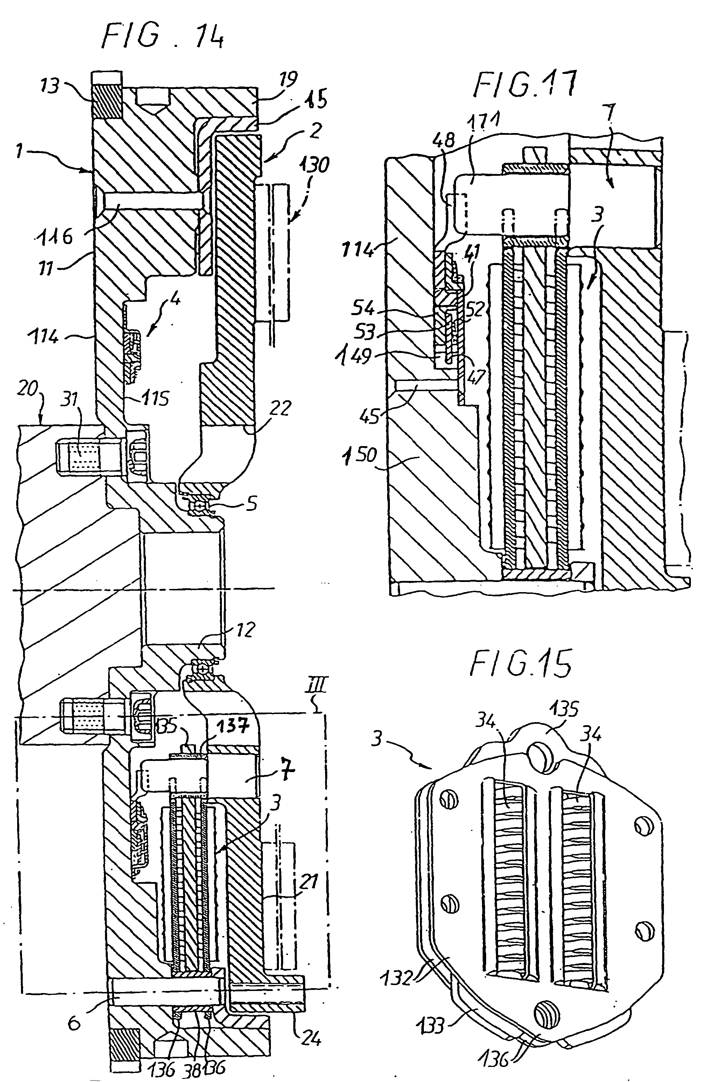

La première masse 1 est destinée à être calée en rotation sur un arbre menant, ici sur le vilebrequin du moteur à combustion interne du véhicule visible partiellement en 20 à la figure 14.

La seconde masse 2 est destinée à être calée en rotation sur un arbre mené, ici l'arbre d'entrée de la boîte de vitesses (non visible) du véhicule automobile.

Cette seconde masse 2 est montée tourillonnante sur un moyeu tubulaire 12 porté par la première masse 1.

La première masse 1 est ici en matière moulable avantageusement en fonte pour augmenter l'inertie du volant amortisseur.

En variante elle peut être à base d'aluminium, le choix de la matière dépendant des applications.

Cette première masse 1 comporte un plateau 11 portant à sa périphérie externe une couronne de démarreur 13 propre à être entraînée par le démarreur du véhicule.

Ce plateau 11 est doté à sa périphérie externe d'un rebord cylindrique 19 d'orientation axiale.

Ici le moyeu 12 est d'un seul tenant avec le plateau 11 et constitue ainsi la partie centrale de la première masse 1. En variante le moyeu 12 peut être rapporté sur le plateau 11.

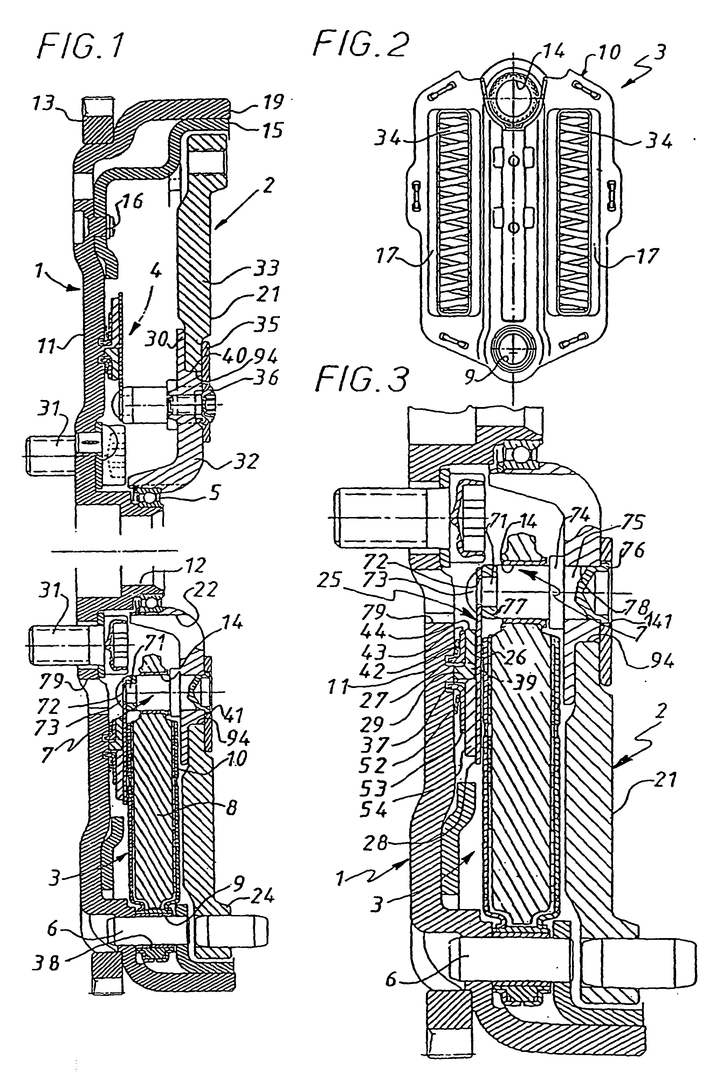

La seconde masse 2 est montée tournante sur la masse 1 par l'intermédiaire d'un palier 5 et constitue le plateau de réaction d'un embrayage à friction comportant, de manière connue en soi, un disque de friction, un plateau de pression, un diaphragme et un couvercle non visibles sur la figure 1.

Le diaphragme, de manière connue en soi, prend appui sur le couvercle, adapté à être rapporté ici sur un rebord périphérique cylindrique d'orientation axiale 24 que présente la seconde masse 2 à sa périphérie externe, pour action sur le plateau de pression et serrage des garnitures de frottement du disque de friction entre ledit plateau de pression et la seconde masse 2 présentant à cet effet une face de friction 21 pour le disque de friction. Ce disque de friction, visible en 130 à la figure 14, est doté à sa périphérie interne d'un moyeu non visible calé en rotation sur l'arbre d'entrée de la boîte de vitesses.

Le diaphragme de l'embrayage est adapté à être actionné, de manière connue en soi, par une butée de débrayage (non visible).

Normalement, l'embrayage est engagé et le disque de friction est serré entre la seconde masse 2 et le plateau de pression de l'embrayage.

Pour désengager l'embrayage, il suffit d'agir à l'aide de la butée de débrayage pour faire pivoter celui-ci.

La seconde masse 2 est donc calée en rotation de manière débrayable sur l'arbre mené par l'intermédiaire de l'embrayage à friction et est ici en fonte.

Ici le palier 5 consiste en un roulement à billes de taille réduite. En variante, il peut s'agir d'un palier lisse. Le roulement 5 est interposé radialement entre le moyeu 12 de la première masse 1 et la périphérie interne (l'alésage interne) de la seconde masse 2.

Le moyeu 12 est épaulé, ainsi que l'alésage interne de la deuxième masse 2.

Le calage axial du roulement 5 est réalisé grâce audits épaulements et à des circlips (non référencés) engagés dans des gorges pratiquées dans le moyeu 12 et dans la seconde masse 2. Ce roulement 5 s'étend radialement en dessous de passages 22 prévus dans la seconde masse 2 pour passage des outils de vissage des vis 31, ici à tête creuse, de fixation du volant amortisseur sur le vilebrequin. Les passages 22 sont donc en coïncidence avec les trous pratiqués dans le plateau 11 pour le passage du filetage des vis 31.

Les deux masses 1, 2 sont montées mobiles l'une par rapport à l'autre à l'encontre, d'une part, des moyens élastiques 3 comportant au moins un organe élastique 34 intervenant globalement radialement entre lesdites masses et monté à articulation sur l'une et l'autre de celles-ci, et, d'autre part, de moyens de frottement à action axiale 4.

Ici plusieurs organes élastiques 34 sont prévus et ceux-ci sont montés dans au moins une cassette articulée comportant dans les figures 1 à 3, d'une part, un boîtier 10 de forme hexagonale oblongue avec un palier 9 et doté de logements 17 pour montage des organes élastiques 34, ici en forme de ressorts à boudin, et, d'autre part, un tiroir 8 en forme d'ancre muni d'un palier 14.

Dans le mode de réalisation de la figure 14 la cassette a une forme différente comme décrit ci-après.

C'est donc par l'intermédiaire des cassettes que les organes élastiques 34 sont montés à articulation sur l'une et l'autre des masses 1, 2.

Dans les figures 1 à 3 deux organes élastiques 34 sont prévus par cassette, lesdits organes élastiques 34 s'étendant parallèlement l'un à l'autre dans la cassette. Les logements 17 consistent ici en des fenêtres comme mieux visible à la figure 2.

Le boîtier 10 et le tiroir 8 sont montés tête-bêche, le palier 9 du boîtier 10 servant au montage de premiers moyens d'articulation 6 sur la première masse 1, tandis que le palier 14 du tiroir 8 sert au montage de seconds moyens d'articulation 7 sur la seconde masse 2.

Dans toutes les figures les moyens d'articulation 6 et 7, qui ici sont radialement alignés, sont décalés radialement l'un par rapport à l'autre. En variante un léger décalage circonférentiel peut exister. Les moyens élastiques 3 sont donc globalement à action radiale.

Ici les moyens d'articulation 6 et 7 consistent en des axes. Les axes 6 sont implantés à la périphérie externe de la première masse 1, tandis que les axes 7 sont implantés à la périphérie interne de la seconde masse 2, ici radialement au-dessus des passages 22 des vis de fixation 31, au voisinage desdits passages.

Plus précisément dans le mode de réalisation des figures 1 à 3 l'axe 6 est emmanché à force dans la première masse 1 à la périphérie externe de celle-ci et s'étend axialement en direction de la seconde masse 2. Son extrémité libre est emmanchée dans une pièce 15 fixée à l'aide de rivets 16 sur le plateau 11 de la première masse 1. La pièce 15 rigidifie la première masse 1 en étant adjacente à la seconde masse 2 et en contact avec le rebord 19.

Un manchon 38 est interposé axialement entre le plateau 11 et cette pièce 15. Il est formé ainsi une chape pour le montage de l'axe 6, qui est ainsi bien soutenu. Ce montage permet également un calage axial de la cassette.

Les moyens de frottement 4 à action axiale interviennent également entre les deux masses 1 et 2. Ces moyens de frottement comportent usuellement au moins une première rondelle de frottement 44.

Ces moyens de frottement 4 sont implantés axialement entre la première masse 1 et les moyens élastiques 3. Ces moyens de frottement 4 s'étendent au-dessus des vis de fixation 31, un jeu axial existant entre les boîtiers 10 et les moyens de frottement 4.

La rondelle 44 est soumise à l'action d'une première rondelle d'application 43 sur laquelle agit un premier moyen élastique à action axiale 42 prenant appui sur le plateau 11 de la première masse 1.

La rondelle d'application 43 présente des pattes axiales 27 coopérant avec des logements ou échancrures ménagés dans le plateau 11 pour son entraînement en rotation, avec ou sans jeu, par ledit plateau 11.

Dans l'espace axial compris entre le plateau 11 de la première masse 1 et les moyens élastiques 3, est disposée une seconde rondelle de frottement 54 coopérant, d'un côté, avec une seconde rondelle d'application 53 qui lui est associée et qui est soumise à l'action d'un second moyen élastique 52 à action axiale prenant appui sur le plateau 11 ; des moyens d'engrènement 29,39, respectivement, sont portés en vis-à-vis par la première 44 et par la seconde 54 rondelles de frottement pour l'entraînement en rotation, avantageusement après absorption d'un jeu circonférentiel, de la seconde rondelle de frottement 54 par la première rondelle de frottement 44.

Ici, la seconde rondelle de frottement 54 s'étend radialement au-dessus de la première rondelle de frottement 44, dans le plan de celle-ci. Elle est donc disposée transversalement au droit de la première rondelle 44 et entoure ladite rondelle 44.

Les moyens d'engrènement 29, 39 agissent entre la périphérie externe de la première rondelle 44 et la périphérie interne de la seconde rondelle 54.

Par exemple, des dents de la seconde rondelle 54 pénètrent à jeu dans des échancrures de la première rondelle 44 et vice versa.

On notera que les rondelles 44, 54 sont plus épaisses respectivement à leurs périphéries externe et interne pour formation des moyens d'engrènement à jeu.

La rondelle d'application 53 associée à la seconde rondelle de frottement 54 est solidaire en rotation de la première masse 1 grâce à des pattes axiales 37 qu'elle comporte et qui coopèrent avec des logements ou échancrures ménagés dans le plateau 11 pour son entraînement en rotation, avec ou sans jeu, par ledit plateau 11.

Les seconds axes 7 portés par la seconde masse sont, suivant une caractéristique pour création d'un sous-ensemble, également portés par une rondelle 25 d'orientation globalement transversale en forme de plaque, perpendiculaire à l'axe de l'ensemble, qui entraîne en rotation la première rondelle de frottement 44 ; pour ce faire, la première rondelle de frottement 44 est solidarisée à la rondelle 25 par exemple par une pellicule de colle 26.

Chaque axe 7 comporte une partie médiane de grand diamètre, recevant à rotation le palier 14 des moyens élastiques 3, qui se prolonge axialement par un tronçon de diamètre réduit 71 qui traverse un trou 72 formé dans le bord radial interne de la rondelle 25 et qui fait saillie axialement au-delà de la face transversale 28 de la rondelle 25 tournée vers le plateau 11 pour permettre la fixation de l'axe 7 sur la rondelle 25 par sertissage axial aboutissant à la réalisation d'une tête sertie 73.

Pour obtention d'une fixation robuste et fiable la portion médiane de grand diamètre de chaque axe 7 se prolonge, à l'opposé, d'une collerette 74 de diamètre légèrement plus grand pour appui de l'axe 7 sur la face intérieure de la portion centrale de la seconde masse 2 ; au-delà de la collerette 74, l'axe 7 se prolonge selon une portion d'extrémité 75, de diamètre légèrement inférieur à celui de la collerette 74, creusée en bout et dont le bord est serti en 76 sur la face extérieure de la portion centrale de la seconde masse 2 pour solidarisation de l'axe 7 avec ladite seconde masse 2, après que chaque portion d'extrémité 75 a traversé un trou 78 ménagé dans la seconde masse 2.

La position axiale des axes 7 est déterminée du fait de la collerette 74 et celle de la rondelle 25 est déterminée du fait de l'épaulement qui délimite le tronçon 71 par rapport à la portion médiane et du fait de la rondelle entretoise 77.

La fixation des seconds axes 7 sur la rondelle 25 permet de réaliser un sous-ensemble, constitué par la rondelle 25 et la série des seconds axes 7, qui est mis en place axialement de manière très aisée en introduisant les axes 7 dans les paliers 14 des moyens élastiques 3 puis dans les trous 78 de la seconde masse 2.

Pour permettre l'opération de fixation par sertissage 76, des passages 79 sont formés en alignement axial dans la partie radiale interne du plateau 11 de la première masse 1 afin d'introduire un outil de réaction prenant appui contre les têtes 73.

Comme le montrent les figures 1 et 3, la seconde rondelle de frottement 54 est serrée élastiquement par le moyen élastique à action axiale 52 entre la rondelle d'application 53 et la face transversale 28 de la rondelle 25. Ainsi, lors du mouvement relatif en rotation des première 1 et seconde 2 masses, la première rondelle de frottement 44 est adaptée à coopérer en frottement uniquement avec la rondelle d'application 43 qui lui est associée, et la seconde rondelle de frottement 54 est adaptée à coopérer en frottement avec la rondelle d'application 53 qui lui est associée et avec la face transversale 28 de la rondelle 25.

Dans le but d'augmenter les performances du double volant amortisseur, la deuxième masse 2 est réalisée en deux parties 32 et 33.

La première partie 32, par l'intermédiaire de son alésage intérieur, est montée à rotation par rapport au moyeu 12 de la première masse 1 avec interposition des moyens de roulement à billes 5. Cette première partie 32 comporte un tronçon central qui se prolonge radialement vers l'extérieur par un voile 30 qui s'étend radialement depuis la surface cylindrique extérieure 40 du tronçon central.

Cette surface cylindrique extérieure 40 constitue une surface de portée cylindrique de manière que le tronçon central constitue un moyeu qui reçoit à rotation la portion centrale en forme de voile de la seconde partie 33 de la deuxième masse 2, constituant le plateau de réaction de l'embrayage.

Cette seconde partie 33 présente une forme générale de plateau en forme de disque annulaire qui est une pièce de fonderie, usuellement en fonte qui s'étend dans un plan transversal et qui porte la face de friction 21.

La portion centrale de la seconde partie 33 est montée avec possibilité de rotation sur la surface de portée 40 par l'intermédiaire de son alésage intérieur 94 qui permet la mise en place de ladite portion centrale axialement sur le moyeu jusqu'à ce que la portion de la face transversale intérieure de la portion centrale vienne en appui contre la zone en vis-à-vis de la face transversale extérieure du voile.

Des moyens limiteurs de couple sont interposés entre les première 32 et seconde 33 parties de la deuxième masse 2.

Les moyens limiteurs de couple sont du type à friction et de forme générale annulaire. Ils sont agencés radialement autour du tronçon central formant moyeu de la première partie 32. Ils sont constitués pour l'essentiel par la portion centrale et le voile contre la face transversale extérieure duquel la portion centrale est sollicitée en appui axial.

L'effort de pression axiale de la portion centrale, latéralement de la droite vers la gauche en considérant les figures 1 et 3, est exercé par une rondelle élastique 35 fixée sur le moyeu central de la première partie 32 par des vis 36 réparties angulairement de manière régulière.

Afin de permettre de réaliser la fixation des axes 7 par sertissage, en regard de la portion d'extrémité 75 des axes 7, la rondelle élastique 35 comporte une série de trous 141.

On a ainsi réalisé des moyens d'accouplement à friction entre les deux parties 32 et 33 de la deuxième masse tournante 2 qui sont des moyens limiteurs de couple, c'est-à-dire qu'ils permettent une rotation relative des deux parties 32 et 33 l'une par rapport à l'autre lorsque le couple appliqué à l'une des deux parties par rapport à l'autre est supérieur à une valeur de tarage déterminée par la structure des moyens d'accouplement à friction et notamment par la rondelle élastique 35.

A cet effet, la rondelle élastique 35 peut être réalisée sous la forme d'une rondelle Belleville, en variante d'un diaphragme, ou d'une rondelle ondulée.

Ici les moyens élastiques 3 comportent quatre cassettes réparties régulièrement circulairement et donc quatre axes 6 et quatre axes 7. Bien entendu, cela dépend des applications. Dans la position de repos les cassettes s'étendent radialement.

Ainsi les cassettes s'inclinent lors du mouvement relatif entre les deux masses 1, 2, les organes 34 sont comprimés et la première rondelle de frottement 44 est entraînée en rotation par la rondelle 25. Les moyens élastiques 3 sont ainsi globalement à action radiale. Cette première rondelle de frottement 44 étant serrée par la rondelle d'application 43 entraînée en rotation par le plateau 11, il se produit un mouvement relatif et un frottement, taré par le moyen élastique à action axiale 42, entre la rondelle de frottement 44, liée en rotation à la rondelle 25, et la face concernée de la rondelle d'application 43. La rondelle de frottement 54 frotte soit sur la face de frottement 28, soit sur la rondelle d'application 53.

Le jeu circonférentiel entre les moyens d'engrènement 29, 39 ayant été rattrapé et le mouvement relatif entre les deux masses 1,2 se poursuivant, la première rondelle de frottement 44 entraîne la seconde rondelle de frottement 54 qui frotte alors, d'une part, sur la face de frottement 28 et, d'autre part, sur la face concernée de la rondelle d'application 53, frottement qui est taré par le moyen élastique 52. Ainsi, la première rondelle de frottement 44 est une rondelle à frottement constant car elle frotte en permanence contre la première rondelle d'application 43. La seconde rondelle de frottement 54 frotte en permanence soit sur la face 28, soit sur la rondelle 53. Après annulation du jeu des moyens d'engrènement 29, 39, les deux faces de la rondelle 54 sont actives. Ainsi, dans une première phase, deux faces de frottement sont actives et, dans une deuxième phase, trois faces de frottement sont actives. Le tarage élastique des rondelles 42, 52 dépend, bien entendu, des applications. Bien évidemment, en créant un jeu circonférentiel entre les pattes 27, 37 des rondelles d'application 43, 53 et les logements associés du plateau 11, la première rondelle 44 peut ne pas intervenir durant une première phase.

Dans ce mode de réalisation le moyen élastique 42, associé à la rondelle 44, a une raideur moindre que le moyen élastique 52 associé à la rondelle 54.

On appréciera le montage concentrique des rondelles 52 à 54 et 42 à 44, les rondelles 52 à 54 entourant les rondelles 42 à 44.

Ces dispositions permettent de rendre compact axialement les moyens de frottement 4.

Il en est de même dans les autres modes de réalisation de l'invention.

On appréciera que les rondelles de frottement 44 et 54 sont très éloignées de la seconde masse 2 en sorte qu'elles sont peu sensibles à la température atteinte par celle-ci, qui peut être très élevée notamment lors de plusieurs démarrages du véhicule en côte du fait que la seconde masse 2 constitue le plateau de réaction de l'embrayage. Les moyens de frottement 4 sont donc protégés thermiquement ; les rondelles de frottement 44 et 54 ne risquent donc pas de fondre. Il en est de même dans les figures 14 à 17 et 19.

Bien entendu, la présente invention n'est pas limitée aux exemples de réalisation décrits. En particulier, les moyens élastiques à action axiale 42 et/ou 52 peuvent consister en un diaphragme, comme, en variante, en une rondelle Belleville, ou en une rondelle élastique ondulée.

Les moyens élastiques 3 peuvent consister en une pluralité de ressorts à boudin, chaque extrémité de ressort à boudin étant dotée d'une boucle pour montage respectivement sur l'axe 6 et 7. En variante, un seul ressort 34 peut être prévu par cassette comme décrit dans le document WO 94/27062.

On peut remplacer les axes 6 et 7 par des tourillons venus de moulage respectivement de la première masse 1 et de la seconde masse 2, en sorte que les moyens d'articulation 6, 7 ne sont pas forcément des axes rapportés. Par simplicité les moyens d'articulation seront dénommés axes.

De même on peut prévoir des paliers 9 et 14 à aiguilles autour des axes 6, 7.

De même on peut revêtir la face 28 de la rondelle 25, formant la face de frottement pour la rondelle de frottement 54, d'un matériau de frottement à coefficient de frottement approprié. Dans tous les cas, cette face de frottement est tournée vers la première masse.

Les axes 7 peuvent être creux en étant implantés dans les passages 22. Les outils de vissage des vis 31 traversent alors les axes 7.

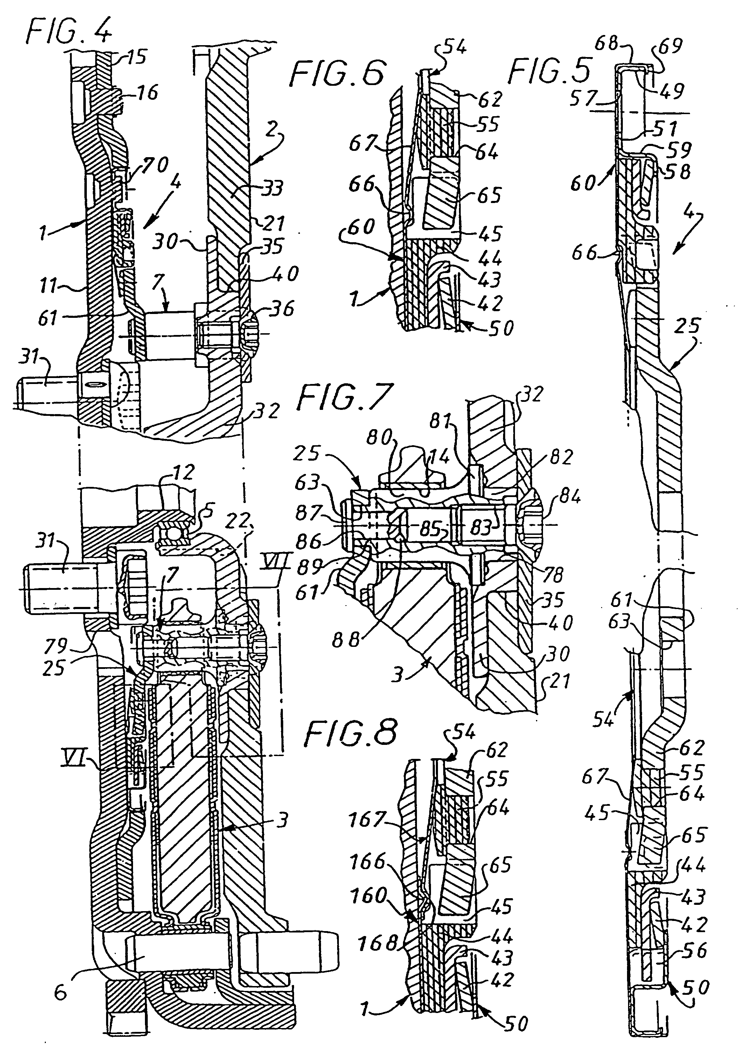

Les figures 4 à 7 montrent une variante de volant amortisseur selon l'invention. Dans cette variante, on a inversé les structures, la première rondelle de frottement 44, son premier moyen élastique 42 et sa première rondelle d'application 43 entourent la seconde rondelle de frottement 54, ainsi que son second moyen élastique 67 et sa seconde rondelle d'application 53.

La seconde rondelle de frottement 54 est solidaire en rotation de la rondelle 25.

Les moyens d'engrènement à jeu circonférentiel interviennent entre la périphérie interne de la première rondelle de frottement 44 et la périphérie externe de la rondelle 25.

La seconde rondelle de frottement 54 constitue la rondelle à frottement constant et agit en permanence, tandis que la rondelle de frottement 44 agit de manière différée.

Dans ce cas le second moyen élastique 67 a une raideur moindre que le premier moyen élastique 42.

Selon cette variante, la rondelle 25 comporte un bord 61 interne ayant des trous 63 recevant à fixation les seconds axes 7 d'une manière qui sera décrite ci-dessus, et une partie externe 62 qui s'étend le long des organes élastiques 34. Le bord interne 61 est décalé axialement, par rapport à la partie externe 62, en direction de la seconde masse 2.

La partie externe 62 présente à sa périphérie une série de dents 65 séparées par des encoches.

La première rondelle de frottement 44 présente des pattes d'entraînement 45 d'orientation radiale interne qui sont reçues, avec jeu circonférentiel, dans les encoches définies par les dents 65 de la rondelle 25.

Il est formé ainsi les moyens d'engrènement à jeu circonférentiel précités.

Avantageusement, la première rondelle de frottement 44 est en matière plastique moulée - ceci permet de réaliser aisément les pattes d'entraînement 45 plus épaisses que la rondelle 25 elle-même pour tenir compte d'éventuelles usures ; on peut ainsi donner à ces pattes d'entraînement 45 l'épaisseur axiale idoine.

Une pièce métallique 50 en forme d'anneau, dite couvercle d'hystérésis, à section globalement en forme de U définissant un bord axial externe 49 et un bord axial interne 59 réunis par un fond transversal 51 muni de trous 57 régulièrement espacés circonférentiellement, entoure circonférentiellement la première rondelle de frottement 44.

Le bord axial interne 59 est prolongé, du côté opposé au fond 51, d'un retour transversal 58 dirigé vers l'axe de l'ensemble et sur lequel est amené à prendre appui le premier moyen élastique à action axiale 42 associé à la première rondelle de frottement 44 sur laquelle il agit par l'intermédiaire de la première rondelle d'application 43.

La rondelle d'application 43 est solidarisée en rotation au couvercle d'hystérésis 50 : pour ce faire, elle porte à sa périphérie externe des pattes dotées d'échancrures qui coopèrent avec des dents 56 ménagées, ici par formage par emboutissage, dans le bord axial interne 59 dudit couvercle d'hystérésis 50.

La seconde rondelle de frottement 54 est ici de forme bombée et calée à rotation sur la partie externe 62, de la rondelle 25, à l'aide de pions axiaux 55 qu'elle présente et qui sont engagés dans des trous 64 ménagés dans ladite partie centrale 62.

Une rondelle élastique de forme conique 67 du type Belleville prend appui par sa périphérie interne sur la seconde rondelle de frottement 54 ; ici, la rondelle élastique de forme conique 67, comme cela est mieux visible sur la figure 6, constitue la partie centrale d'une rondelle support 60 peu épaisse, ici en forme de clinquant métallique, en y étant limitée radialement par une rainure circonférentielle 66 ; au-delà de ladite rainure 66, la rondelle support 60 s'étend transversalement et porte à son extrémité externe un rebord axial 68 muni, en bout, de pattes de clipsage 69 réparties, circonférentiellement s'étendant radialement vers l'intérieur pour clipsage de la rondelle support 60 sur la tranche du bord axial externe 49 du couvercle d'hystérésis 50. Ici, le premier moyen élastique 42, c'est-à-dire la rondelle Belleville 42 a une charge supérieure à celle du second moyen élastique 67, à savoir la rondelle Belleville 67. Ainsi, la seconde rondelle 54 filtre bien les vibrations dans le domaine de ralenti du moteur. Après annulation du jeu des moyens d'engrènement à jeu, le frottement croît pour bien filtrer les vibrations dans le régime de marche du véhicule.

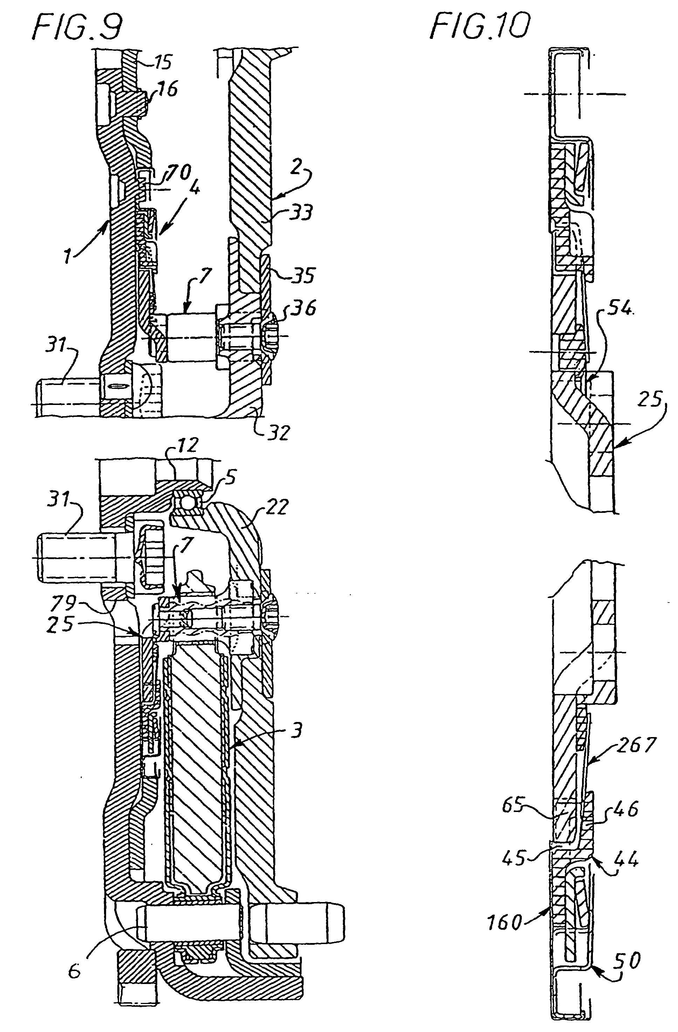

La figure 8 montre une variante de rondelle support ; ici, la rondelle support 160 est limitée radialement vers l'intérieur par la rainure circonférentielle 166 qui est mise à profit pour le centrage d'une rondelle élastique à action axiale 167 indépendante de la rondelle support 160 et qui présente intérieurement une rainure circonférentielle 168 complémentaire de la rainure 166 avec laquelle elle coopère. La rondelle 160 est également peu épaisse et consiste en un clinquant métallique.

La disposition qui vient d'être décrite montre la constitution d'un sous-ensemble illustré par la figure 5 ; la rondelle support 60 est percée de trous en concordance avec les trous 57 du couvercle d'hystérésis 50, ce qui permet audit sous-ensemble d'être monté sur et solidarisé à la première masse 1 par des rivets 70, comme montré sur la figure 4.

Ainsi, la première rondelle de frottement 44 est amenée à coopérer en frottement avec la rondelle support 60 solidaire en rotation de la première masse 1, comme le sont la rondelle d'application 43 et les moyens élastiques à action axiale 42 qui lui sont associés. La première rondelle de frottement 44 est admise à coopérer également en frottement avec la rondelle d'application 43.

Ici, les seconds axes 7, mieux visibles sur la figure 7, sont des axes creux. Chaque axe 7 comprend un corps cylindrique 80 reçu dans le palier 14 des moyens élastiques 3. Le corps 80 se prolonge vers la première masse 1 selon un canon 89 de plus petit diamètre, de longueur axiale au plus égale à l'épaisseur de la rondelle 25, reçu dans les trous 63 de ladite rondelle 25.

Au droit du canon 89 et d'une partie du corps 80, l'axe 7 est percé d'un alésage 86 d'extrémité qui se prolonge en direction de la seconde masse 2 selon un autre alésage 85 de diamètre légèrement supérieur au précédent en sorte qu'entre les deux est définie une portée transversale 88.

Dans l'alésage 86 est introduite la queue d'un rivet 87 dont la tête est appliquée contre la face de la rondelle 25 qui est tournée vers la première masse 1. La queue du rivet 87 qui se prolonge jusque partiellement dans l'alésage 85 est ensuite matée contre la portée transversale 88. Ainsi, les seconds axes 7 sont solidaires, comme précédemment, de la rondelle 25.

Le prolongement, en direction de la seconde masse 2, du corps 80 porte une collerette d'appui 81 reçue dans un ramage de la partie centrale 32 de la seconde masse 2 et la portion d'extrémité 82, au-delà de la collerette d'appui 81, est reçue dans les trous 78 de ladite partie centrale 32.

L'alésage 85 débouche à l'extérieur, côté seconde masse 2, par un alésage 83 fileté intérieurement. Une vis 84, dont la tête prend appui sur la rondelle de serrage 35 du limiteur de couple, est vissée dans l'alésage 83 fileté intérieurement, solidarisant ainsi le second axe 7 à la seconde masse 2.

Avantageusement, les vis 36 et 84 sont identiques.

Les figures 9 et 10 sont analogues aux figures 4 et 5 mais concernent une variante ; ici, la seconde rondelle de frottement 54 s'étend, par rapport à la rondelle 25, du côté de la seconde masse 2 ; par ailleurs, les pattes 45 de la première rondelle de frottement 44 sont bordées du même côté, c'est-à-dire du côté de la seconde masse 2, d'un rebord annulaire transversal 46 sur lequel prend appui la rondelle élastique à action axiale 267 associée à la seconde rondelle de frottement 54 ; la périphérie externe de la rondelle élastique 267 est crénelée pour coopérer avec les dents 45, de la première rondelle de frottement 44, pour son entraînement en rotation.

Ici, la rondelle support 160 est du genre de celle de la figure 8, mais bien entendu elle ne présente pas à sa périphérie interne de rainure circonférentielle telle que 166.

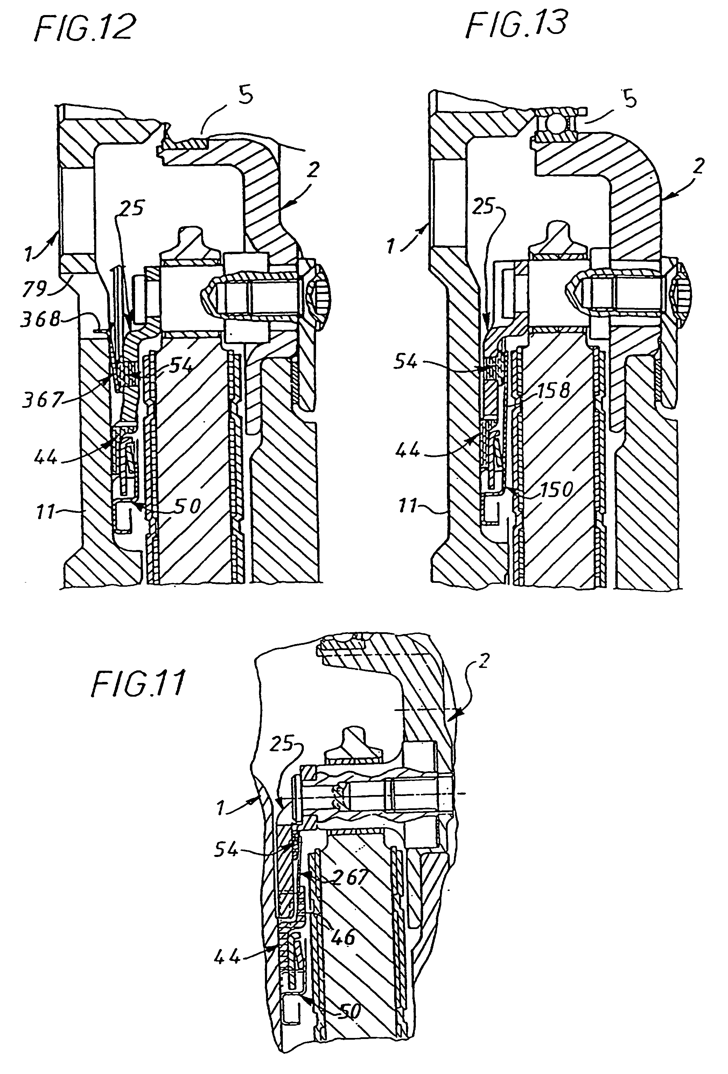

La rondelle support 160 pourrait être supprimée, auquel cas la première rondelle de frottement 44 coopère directement en frottement avec la première masse 1 : c'est la variante illustrée par la figure 11.

La figure 12 illustre également une variante sans rondelle support selon cette variante, la seconde rondelle de frottement 54 est, comme dans les variantes des figures 4 à 8, disposée, par rapport à la rondelle 25, du côté de la première masse 1. Ici, elle est associée à une rondelle élastique à action axiale 367 dont la périphérie interne est munie de doigts axiaux 368 s'étendant dans les passages 79 pour son entraînement en rotation par la première masse 1. Comme à la figure 4, le couvercle d'hystérésis est fixé par des rivets, non visibles, ici directement au plateau 11.

La figure 13 illustre également une variante sans rondelle support selon cette variante, la seconde rondelle de frottement 54 est, comme dans la variante des figures 9 et 10, disposée, par rapport à la rondelle 25, du côté de la seconde masse 2. Ici, le retour transversal 158 du couvercle d'hystérésis 150 est prolongé radialement vers l'intérieur jusqu'au droit de la seconde rondelle de frottement 54 avec laquelle il coopère ; ainsi, il constitue lui-même la face de frottement pour la seconde rondelle de frottement 54 et le moyen élastique à action axiale associé à ladite rondelle de frottement 54.

Il va de soi que les variantes des figures 11 à 13 qui viennent d'être décrites sans rondelle support pourraient comporter une rondelle support telle que la rondelle support 1 60 des figures 9 et 10.

Ainsi qu'il ressort à l'évidence de la description, on obtient une filtration optimale des vibrations à l'aide de la première rondelle de frottement 44, selon l'invention, engrenant, de préférence à jeu, avec la rondelle 25 de manière précitée, et la seconde rondelle de frottement 54, de préférence à frottement constant.

La rondelle 25 permet un bon maintien des axes 7 qui sont ainsi reliés ensemble. Une désolidarisation des axes 7 est ainsi évitée. Le double volant est donc d'un fonctionnement plus fiable et plus robuste.

La rondelle 25 présente ainsi plusieurs fonctions : elle forme une rondelle de commande pour la première rondelle de frottement 44 ; elle offre parfois une face d'appui au dispositif de frottement constant ou porte un constituant de celui-ci ; elle permet la création d'un sous-ensemble rondelle-axes ; en fonctionnement, elle maintient les axes et évite un déplacement de ceux-ci ; enfin, elle constitue un outil de montage des axes.

On comprendra également que la première rondelle de frottement 44 pourrait, dans les figures 4 à 13, engrener sans jeu circonférentiel avec la rondelle 25.

Dans tous les cas, les moyens de frottement 4 comportent deux rondelles de frottement implantées radialement l'une au-dessus de l'autre. La seconde rondelle de frottement 54 est disposée transversalement globalement au droit de la rondelle 44. Les moyens de frottement sont de ce fait d'un encombrement axial réduit. Il en est de même dans les figures 14 à 19 dans lesquelles les cassettes ont une forme différente et la première rondelle de frottement 44 est entraînée en rotation par les axes 6,7 ou par des manchons 137,38.

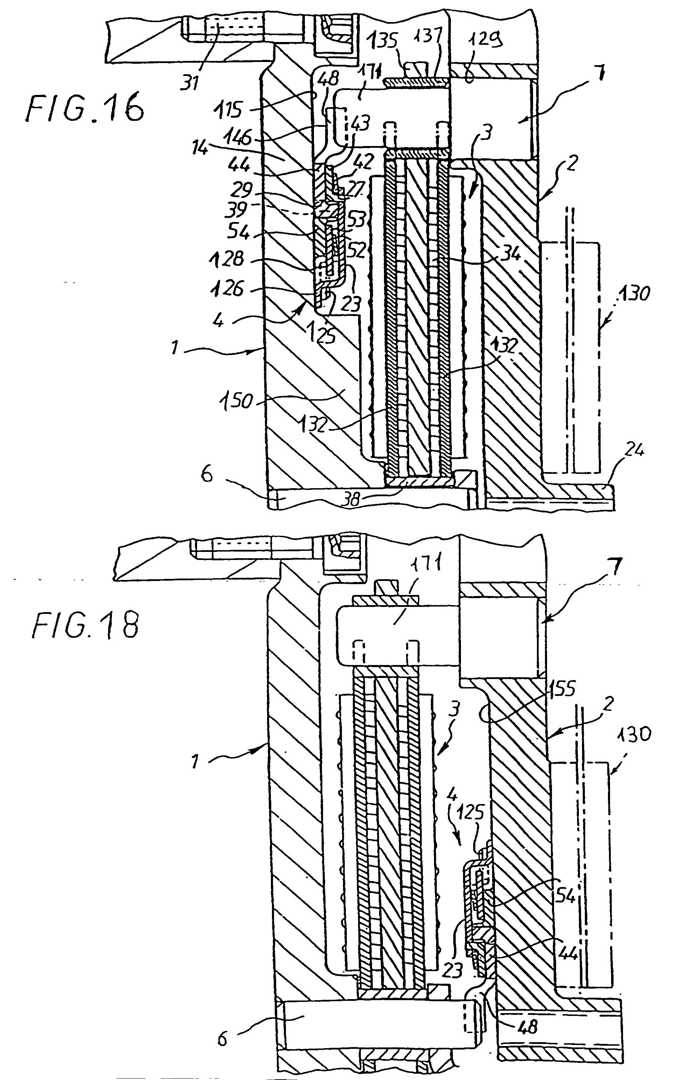

Ainsi à la figure 15 la cassette comporte, d'une part, un voile 133 doté de premiers logements pour montage des organes élastiques 34, en forme de ressorts à boudin, et, d'autre part, deux pièces de guidage 132 disposées de part et d'autre dudit voile 133 et présentant chacune, en regard des premiers logements, un second logement pour montage des ressorts 34.

Les pièces de guidage 132 sont fixées latéralement l'une à l'autre ici à l'aide de colonnettes formant entretoises entre les deux pièces 132.

En variante les pièces de guidage 132 sont fixées l'une à l'autre latéralement à l'aide de bords latéraux soudés entre eux.

Par simplicité les colonnettes n'ont pas été représentées à la figure 15 et seuls sont visibles les trous pratiqués dans les pièces 132 pour passage des têtes des colonnettes écrasées pour la fixation des pièces de guidage 132.

Le voile 133 et les pièces de guidage 132 sont montées tête-bêche, le voile présentant à sa périphérie interne une protubérance 135 pour montage des seconds moyens d'articulation 7 sur la seconde masse, tandis que les pièces de guidage 132 présentent à leur périphérie interne chacune une protubérance 136 en regard l'une de l'autre pour montage des premiers moyens d'articulation 6 sur la première masse 1.

Le voile 133 est évidé à ce niveau pour passage des premiers moyens d'articulation 6.

Les protubérances 135 et 136 sont décalées radialement l'une par rapport à l'autre et comme à la figure 1 il en est de même des moyens d'articulation 6 et 7 sous forme d'axes, qui pour la position de repos, sont radialement alignés. En variante un léger décalage circonférentiel peut exister, les moyens élastiques 3 étant globalement à action radiale.

L'implantation des axes 6,7 est réalisée comme à la figure 1, néanmoins on remarquera que le plateau 11 est plus massif à sa périphérie externe et comporte à sa périphérie interne une portion interne 114 d'épaisseur réduite.

Dans ces figures la deuxième masse 2 est réalisée en une seule partie et les axes 7 sont simplement engagés à force dans la deuxième masse 2. Les protubérances 135 et 136 sont trouées chacune pour montage de manchons 137,38 enfilés dans lesdits trous. Le manchon 137 est solidaire par exemple par collage ou soudage de la protubérance 135 du voile 133, tandis que le manchon 38 est solidaire, par exemple par collage ou soudage des protubérances 136 des pièces de guidage 132. L'axe 6 est emmanché à force à la périphérie externe de la première masse 1.

L'extrémité libre de l'axe 6 est emmanché à force dans la pièce 15 de fermeture fixée à l'aide de rivets 116 sur le plateau 11. La pièce 15 rigidifie la première masse 1 et est adjacente à la deuxième masse 2. Le manchon 38 est interposé axialement entre le plateau 11 et cette pièce 15. Il est formé ainsi une chape pour le montage de l'axe 6. On voit en 4 comme à la figure 1 les moyens de frottement à action axiale intervenant entre les deux masses 1,2, ici entre le plateau 11 et les moyens élastiques 3.

Ces moyens de frottement comportent donc la première rondelle de frottement 44 et le plateau 11 offre, au niveau de sa portion interne 114, une face de frottement 115, tournée vers la seconde masse 2, à la rondelle 44 en matière synthétique renforcée par des fibres. La rondelle 44 présente à sa périphérie interne une protubérance 146 (figure 16) dirigée axialement vers la seconde masse pour définir une surépaisseur.

Le dispositif de frottement 4 est implanté à la faveur du changement d'épaisseur du plateau 11 qui définit une surépaisseur 150.

La disposition est axialement inversée par rapport à celle de la figure 1. Ainsi la rondelle 44 est soumise à l'action de la rondelle d'application 43, qui présente des pattes axiales 27 coopérant avec des échancrures ménagées dans une plaque 23, en forme d'anneau, formant couvercle d'hystérésis, pour son entraînement en rotation avec ou sans jeu par ladite plaque 23. Un premier moyen élastique à action axiale 42, ici une rondelle Belleville, agit sur la rondelle d'application 43 en prenant appui sur la plaque 23 pour serrer la rondelle de frottement 44 entre la rondelle d'application 43 et la face 115 du plateau 11. La plaque 23 est fixée par des rivets 125 sur la première masse à l'aide d'un rebord 126 transversal qu'elle comporte et qui est dirigé radialement vers l'extérieur en étant au contact de la face 115.

Il est formé ainsi une boucle d'action et de réaction au sein de la première masse, un jeu axial existant entre la plaque 23 et les moyens élastiques 3.

La seconde rondelle de frottement 54 est disposée transversalement au droit de la première rondelle de frottement 44 et coopère avec la face de frottement 115 en étant pincée entre cette face et une rondelle d'application 53 soumise à l'action d'un second moyen élastique à action axiale 52, ici en forme de rondelle Belleville, prenant appui sur la plaque 23.

La rondelle d'application 53 est liée en rotation à la première masse 1. Pour ce faire la plaque 23 présente au niveau de son rebord externe 26 des dents 128 obtenues par emboutissage et s'étendant radialement vers l'intérieur. Les dents 128 coopèrent avec des échancrures ménagées à la périphérie externe de la rondelle d'application 53.

Des moyens d'engrènement à jeu 29,39 interviennent, comme dans les autres figures, entre les rondelles de frottement 44,54 pour leur liaison en rotation. Ces moyens 29,39 interviennent entre la périphérie externe de la rondelle 44 et la périphérie interne de la rondelle 54.

Pour ce faire les rondelles 44 et 54 sont épaissies à ce niveau, comme à la figure 1.

Ces moyens consistent en des pattes de la rondelle 54 engagées à jeu circonférentiel dans des échancrures de la rondelle 44. Bien entendu l'inverse est possible des pattes de la rondelle 44 étant engagées dans des échancrures de la rondelle 54. Les échancrures sont ici en forme de rainures.

En variante la liaison en rotation de la rondelle 53 avec la première masse 1 est réalisée (figure 17) à l'aide de rainures 149 ménagées dans l'alésage interne de la surépaisseur 150. Ces rainures sont fermées axialement par la portion interne 114 et par une rondelle 41 fixée par rivetage en 145 sur la surépaisseur 150 de la première masse 1.

Des pattes 47, ménagées à la périphérie externe de la rondelle d'application 53, s'engagent de manière complémentaire dans les rainures 149 pour former une liaison en rotation par coopération de formes, comme dans les figures 14 et 16, avec possibilité de mobilité axiale de la rondelle d'application 53.

L'inversion de structure est bien entendu possible, les pattes appartenant à la surépaisseur 50 et les échancrures à la rondelle 53.

Les axes 7 ont une zone d'emmanchement 129 dans la seconde masse 2 de plus grande taille que leur extrémité libre 171 servant d'axe d'articulation au manchon 137. Cette extrémité 171, de diamètre réduit, est prolongée axialement en direction de la portion interne 114 pour pénétrer à jeu de montage dans l'évidement 48 concerné de la première rondelle de frottement 44 entourée par la seconde rondelle de frottement 54.

En variante l'extrémité 171 pénètre à jeu circonférentiel dans l'évidement 48. En variante ce sont les manchons 137 qui sont prolongés axialement vers la portion 114 de la première masse pour pénétrer avec ou sans jeu circonférentiel dans les évidements 48, réalisés dans la protubérance d'entraînement 146 plus épaisse de la première rondelle de frottement 44.

Ici les moyens élastiques 3 comportent quatre cassettes réparties régulièrement circonférentiellement. Au repos les cassettes s'étendent radialement. En service, lors d'un mouvement relatif entre les deux masses 1,2, les ressorts 34 sont comprimés et la première rondelle de frottement 44 est entraînée en rotation par l'extrémité 171 des axes 7 ou l'extrémité des manchons 137.

La rondelle 44 étant serrée entre la face 115 du plateau 11 et la rondelle d'application 43, il se produit un mouvement relatif et un frottement entre la rondelle 44 et la face 115 et entre la rondelle 44 et la rondelle d'application 43. Ce frottement est taré par les moyens élastiques à action axiale 42.

La première rondelle 44 est donc une rondelle de frottement permanent à deux faces de frottement, et est adaptée à filtrer les vibrations au régime de ralenti du moteur.

Après rattrapage du jeu circonférentiel entre les moyens d'engrènement 29,39 il se produit un mouvement relatif, et donc un frottement entre la rondelle 54 et la face 115 et entre la rondelle 54 et la rondelle d'application 53.

Ce frottement est taré par les moyens élastiques à action axiale 52 de plus forte raideur que les moyens élastiques à action axiale 42.

La seconde rondelle de frottement 54 intervient par ses deux faces donc en différé pour filtrer les vibrations dans le régime de marche du véhicule au-delà du régime de ralenti du moteur.

Les moyens 42,52 peuvent consister en un diaphragme, une rondelle Belleville ou une rondelle élastique ondulée.

On notera que les rondelles 44,54 sont éloignées de la seconde masse 2 et donc bien protégées therrmiquement.

Le dispositif 4 est peu encombrant axialement du fait du montage des rondelles de frottement 44,54 l'une au-dessus de l'autre. En outre on tire parti de la surépaisseur 150 pour implanter le dispositif de frottement 4 à l'intérieur de ladite surépaisseur.

Comme dans les figures 1 à 13 les rondelles d'application 43,53 et les moyens élastiques à action axiale 42,52 sont implantés radialement de manière concentrique pour réduire l'encombrement.

La plaque 23 joue le rôle du couvercle d'hystérésis 50 des figures 4 à 7. La plaque 23 sert à l'entraînement en rotation des rondelles d'application 43,53.

Bien entendu un seul ressort 34 peut être prévu par cassette, le voile et la rondelle de guidage appartenant à un piston et à un cylindre comme décrit dans le document WO 94/27 062.

Bien entendu on peut remplacer les axes 6 et 7 par des tourillons venus de moulage respectivement de la seconde masse 2 et de la première masse 1.

On peut prévoir des paliers à aiguilles entre les manchons 137,38 et les axes 6,7. Les axes 7 peuvent être creux et être implantés dans les passages 22, les outils de vissage des vis 31 traversant lesdits axes.

Un autre exemple d'inversion des structures est illustré par la figure 18 selon cette variante, un jeu axial est prévu entre les moyens élastiques 3 et la seconde masse 2, ledit jeu axial étant mis à profit pour recevoir les moyens de frottement 4 ; ici les moyens de frottement 4, identiques aux moyens de frottement de la variante des figures 14 à 16, ont leur plaque 23 en forme de couronne solidarisée par les rivets 125 à la seconde masse 2 ; la face 155, de la seconde masse 2, tournée vers la première masse 1, est une face de frottement commune aux deux rondelles de frottement 54 et 44 ; ici, les échancrures 48 de la première rondelle de frottement 44 sont adaptées à coopérer avec les axes 6 pour l'entraînement en rotation de ladite première rondelle de frottement 44.

Le fonctionnement de cette variante est identique à celui décrit à propos des figures 14 à 16.

Bien entendu on peut combiner entre elles les différentes figures. Par exemple, on peut concevoir un mode de réalisation faisant appel à la plaque 23 des figures 14 à 16 et à une rondelle 25 des figures 1 à 3.

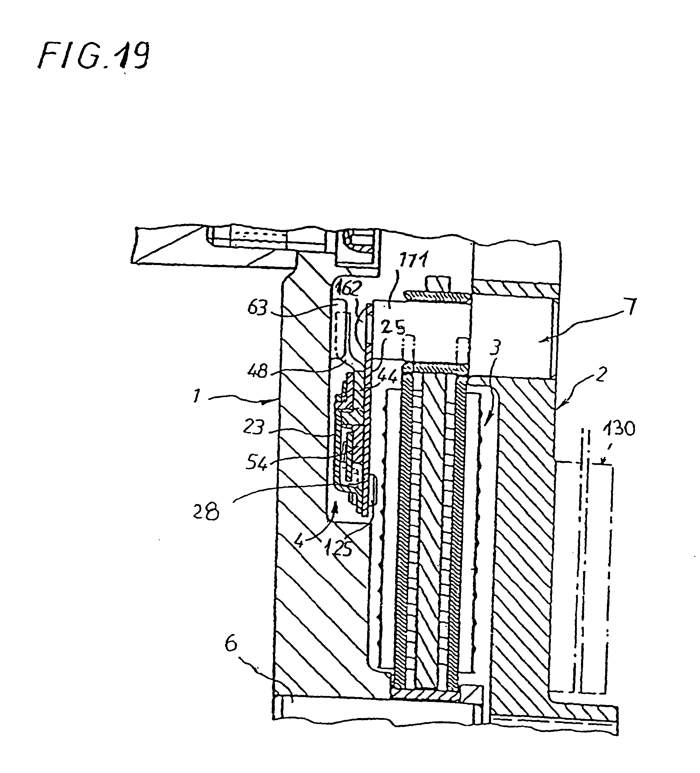

Ainsi dans la variante de la figure 19 les moyens de frottement 4 sont implantés axialement entre les moyens élastiques 3 et la première masse 1, tandis que les rondelles de frottement 44 et 54 coopèrent en frottement avec des pièces solidaires en rotation de la seconde masse 2 ; les moyens de frottement 4 sont identiques à ceux de la figure 16, mais ici ils ont été retournés à 180 degrés en sorte que la plaque 23 en forme de couronne a été solidarisée par les rivets 125 à une plaque de frottement 25 de forme annulaire elle-même rivetée en 162 à sa périphérie interne en bout des extrémités 171 des axes 7, les rondelles de frottement 44, 54 coopérant en frottement avec la face 28 de la plaque de frottement 25 tournée vers la première masse 1. Les échancrures 48 de la première rondelle de frottement 44 coopèrent, pour l'entraînement en rotation de cette première rondelle de frottement 44 par la première masse 1, avec des tétons 63 portés par la première masse 1 placés ici au droit des axes 7. La plaque 25 est donc la rondelle 25 de fixation des axes de la figure 1.

Ainsi qu'on l'aura compris, les moyens d'engrènement 29, 39 intervenant entre les rondelles de frottement 44, 45 comportent une alternance de dents et d'échancrures, les dents de la première rondelle de frottement 44 pénétrant ici à jeu dans les échancrures de la seconde rondelle de frottement, et vice versa. Pour ce faire, il est avantageux que les rondelles de frottement soient en matière synthétique moulable, ce qui permet aisément d'épaissir les rondelles de frottement 44, 54 au niveau des moyens d'engrènement 29, 39 comme visible dans les figures. Dans tous les cas, les moyens de frottement 4 sont peu épais axialement et une même face de frottement peut servir pour les deux rondelles de frottement.

La première rondelle de frottement 44 peut intervenir en premier par rapport à la seconde rondelle de frottement 54. L'inverse est également possible.

D'une manière générale les moyens élastiques 42 et 52, 67,167 ont des raideurs différentes. Les moyens élastiques, qui sont associés à la rondelle de frottement 44,54 intervenant la première, pour notamment filtrer les vibrations dans le domaine du régime de ralenti du moteur du véhicule, étant moins raides que les autres associés à l'autre rondelle de frottement.

Dans les figures 14 à 18, on peut revêtir la face de frottement 115 du plateau 11 ou la face de frottement 155 de la seconde masse d'un matériau de frottement à coefficient de frottement approprié.

Bien entendu en variante dans ces figures, on peut avoir recours à une solution avec une rondelle de support comme par exemple dans les figures 4 à 7, la plaque 23 étant assemblée à ladite rondelle.

A la figure 14 les axes 7 peuvent présenter une collerette et être fixés par sertissage comme à la figure 1.

## Revendications

1. Volant amortisseur, notamment pour véhicules automobiles, comportant deux masses coaxiales (1,2) montées mobiles l'une par rapport à l'autre à l'encontre, d'une part, de moyens élastiques (3) comportant au moins un organe élastique (34) intervenant globalement radialement entre lesdites masses et monté à articulation sur l'une et l'autre de celles-ci, et, d'autre part, de moyens de frottement à action axiale (4), dans lequel l'une (1) des masses (1, 2), dite première masse, est propre à être calée en rotation sur un arbre menant, tandis que l'autre (2) des masses (1,2), dite seconde masse, constitue le plateau de réaction d'un embrayage, les moyens de frottement (4 étant implantés axialement entre les deux masses (1,2), et présentant au moins une rondelle de frottement (44), dite première rondelle de frottement, propre à être entraînée en rotation, éventuellement après rattrapage d'un jeu, par l'une des première et seconde masses (1,2) et à coopérer en frottement avec au moins une face de frottement solidaire en rotation de l'autre des première et seconde masses (2,1), ledit au moins un organe élastique (34) étant monté à articulation sur la première masse (1) par l'intermédiaire d'un premier axe (6) et sur la seconde masse (2) par l'intermédiaire d'un second axe (7), les moyens de frottement (4) présentant une seconde rondelle de frottement (54) disposée transversalement globalement au droit de la première rondelle de frottement (44), des moyens d'engrènement (29, 39, 25) intervenant en rotation entre la première rondelle de frottement (44) et la seconde rondelle de frottement (54) et la seconde rondelle de frottement étant adaptée à coopérer au frottement avec au moins une face de frottement solidaire de l'autre des première et seconde masses.

2. Volant selon la revendication 1, **caractérisé par le fait que** la première rondelle de frottement (44) entraîne en rotation la second rondelle de frottement (54) grâce à des moyens d'engrènement (29, 39) que portent en vis-à-vis la première (44) et la seconde (54) rondelles de frottement.

3. Volant selon la revendication 1 ou 2, dans lequel les moyens élastiques (3) sont montés à articulation sur la seconde masse (2) à l'aide d'un second axe (7) porté par la seconde masse (2), **caractérisé par le fait que** lesdits seconds axes (7) sont fixés sur une rondelle (25) d'orientation globalement transversale et **par le fait que** la rondelle (25) présente à sa périphérie externe une série de dents (65) séparées par des encoches dans lesquelles sont reçues des pattes d'entraînement (45) d'orientation radiale interne que présente la première rondelle de frottement (44).

4. Volant selon la revendication 3, **caractérisé par le fait que** la seconde rondelle de frottement (54) est implantée radialement en dessous de la première rondelle de frottement (44) et un couvercle d'hystérésis (50, 150), solidaire de la première masse (1), entourant circonférentiellement la première rondelle de frottement (44), présente un retour transversal (58) sur lequel est amenée à prendre appui la rondelle élastique à action axiale (42) associée qui agit sur la première rondelle de frottement (44) par l'intermédiaire de la rondelle d'application (43) associée qui porte à sa périphérie externe des pattes qui coopèrent avec des dents (56) du couvercle d'hystérésis (50, 150).

5. Volant selon la revendication 4, **caractérisé par le fait que** la seconde rondelle de frottement (54) est solidaire de la rondelle (25) grâce à des pions axiaux (55) qui coopèrent avec des trous (64) de la rondelle (25).

6. Volant selon l'une quelconque des revendications 4 ou 5, **caractérisé par le fait que** la seconde rondelle de frottement (54) est implantée axialement entre la rondelle (25) et les moyens élastiques (3).

7. Volant selon la revendication 6, **caractérisé par le fait que** la seconde rondelle de frottement (54) est soumise à l'action d'une rondelle élastique à action axiale (267) qui prend appui sur un rebord annulaire transversal (46) de la première rondelle de frottement (44).

8. Volant selon la revendication 6, **caractérisé par le fait que** la seconde rondelle de frottement (54) est soumise à l'action d'une rondelle élastique à action axiale (158) constituée par le retour transversal du couvercle d'hystérésis (150).

9. Volant selon l'une quelconque des revendications 4 ou 5, **caractérisé par le fait que** la seconde rondelle de frottement (54) est implantée axialement entre la rondelle (25) et la première masse (1).

10. Volant selon la revendication 9, **caractérisé par le fait que** la seconde rondelle de frottement (54) est soumise à l'action d'une rondelle élastique (167, 367) prenant appui sur la première masse (1) et ayant des doigts axiaux (368) s'étendant dans les passages (79) de la première masse (1).

11. Volant selon l'une quelconque des revendications 4 à 10, **caractérisé par le fait qu'**une rondelle support (60, 160), solidarisée par sa périphérie extérieure au couvercle d'hystérésis (50, 150), est placée axialement entre la première masse (1) et les moyens de frottement (4) en offrant une face de frottement à la première rondelle de frottement (44).

12. Volant selon les revendications 9 et 11, **caractérisé par le fait que** la rondelle élastique (67) à l'action de laquelle est soumise la seconde rondelle de frottement (54) fait partie de la rondelle support (60).

13. Volant selon l'une quelconque des revendications précédentes, **caractérisé par le fait que** ladite l'une des masses (1,2) est la seconde masse (2) et la au moins une face de frottement est solidaire en rotation de la première masse (1).

14. Volant selon l'une quelconque des revendications précédentes, **caractérisé par le fait que** chaque rondelle de frottement (44,54) est propre à être serrée axialement par une rondelle d'application (43,53) soumise à l'action d'une rondelle élastique à action axiale (42,52).

15. Volant selon la revendication 14, **caractérisé par le fait que** la charge de la rondelle élastique (52) associée à la seconde rondelle de frottement (54) est inférieure à la charge de la rondelle élastique (42) associée à la première rondelle de frottement (44).

16. Volant selon l'une quelconque des revendications précédentes, **caractérisé par le fait que** les rondelles de frottement (44,54) sont placées axialement entre la première masse (1) et les moyens élastiques (3).

17. Volant selon l'une quelconque des revendications précédentes, dans lequel les deux masses (1, 2) sont montées mobiles l'une par rapport à l'autre, à l'aide d'un palier (5) interposé radialement entre un moyeu (12) solidaire de la première masse (1) et un alésage interne de la seconde masse (2), **caractérisé par le fait que** le palier (5) est implanté radialement en dessous des ouvertures (22) prévues dans la seconde masse pour le passage d'outils de vissage des vis de fixation destinées à la fixation du volant amortisseur sur son arbre menant et en ce que les moyens de frottement (4) s'étendent radialement au-dessus des vis de fixation (31).

## Patentansprüche

1. Dämpfungsschwungrad, insbesondere für Kraftfahrzeuge, das zwei koaxiale Massen (1, 2) aufweist, die entgegen der Wirkung einerseits von elastischen Mitteln (3), die mindestens ein elastisches Glied (34) umfassen, das allgemein radial zwischen den Massen wirkt und gelenkig an der einen und anderen davon angebracht ist, und andererseits von axial wirkenden Reibmitteln (4) bezüglich einander beweglich angebracht sind, wobei die eine (1) der Massen (1, 2), die so genannte erste Masse, drehfest an einer Antriebswelle festgeklemmt werden kann, während die andere (2) der Massen (1, 2), die so genannte zweite Masse, die Gegendruckplatte einer Kupplung bildet, wobei die Reibmittel (4) axial zwischen den beiden Massen (1, 2) angebracht sind und mindestens einen Reibring (44), den so genannten ersten Reibring, aufweisen, der gegebenenfalls nach einer Spielnachstellung durch die erste oder die zweite Masse (1, 2) in Drehung angetrieben werden und unter Reibung mit mindestens einer drehfest mit der jeweils anderen der ersten bzw. zweiten Masse (2, 1) verbundenen Reibfläche zusammenwirken kann, wobei das mindestens eine elastische Glied (34) durch eine erste Achse (6) gelenkig an der ersten Masse (1) und durch eine zweite Achse (7) an der zweiten Masse (2) angebracht ist, wobei die Reibmittel (4) einen zweiten Reibring (54) aufweisen, der allgemein quer verlaufend am ersten Reibring (44) angeordnet ist, wobei Eingriffsmittel (29, 39, 25) rotatorisch zwischen dem ersten Reibring (44) und dem zweiten Reibring (54) wirken und der zweite Reibring dazu ausgeführt ist, unter Reibung mit mindestens einer fest mit der anderen der ersten bzw. zweiten Masse verbundenen Reibfläche zusammenzuwirken.

2. Schwungrad nach Anspruch 1, **dadurch gekennzeichnet, dass** der erste Reibring (44) den zweiten Reibring (54) dank der Eingriffsmittel (29, 39), die von dem ersten (44) und dem zweiten (54) Reibring getragen werden, in Drehung antreibt.

3. Schwungrad nach Anspruch 1 oder 2, bei dem die elastischen Mittel (3) mittels einer zweiten Achse (7), die von der zweiten Masse (2) getragen wird, gelenkig an der zweiten Masse (2) angebracht sind, **dadurch gekennzeichnet, dass** die zweiten Achsen (7) an einer Scheibe (25) mit allgemein quer verlaufender Ausrichtung befestigt sind und die Scheibe (25) an ihrem Außenumfang eine Reihe von Zähnen (65) aufweist, die durch Kerben getrennt sind, in denen an dem ersten Reibring (44) vorgesehene Antriebsnasen (45) mit radialer innerer Ausrichtung aufgenommen werden.

4. Schwungrad nach Anspruch 3, **dadurch gekennzeichnet , dass** der zweite Reibring (54) radial innerhalb des ersten Reibrings (44) angebracht ist und ein fest mit der ersten Masse (1) verbundener Hysteresedeckel (50, 150), der den ersten Reibring (44) um seinen Umfang umgibt, einen Querrücksprung (58) aufweist, an den die mittels der zugehörigen Anlagescheibe (43), die an ihrem Außenumfang mit Nasen versehen ist, die mit Zähnen (56) des Hysteresedeckels (50, 150) zusammenwirken, auf den ersten Reibring (44) wirkende zugehörige axial wirkende elastische Scheibe (42) in Anlage gebracht wird.

5. Schwungrad nach Anspruch 4, **dadurch gekennzeichnet , dass** der zweite Reibring (54) dank axialer Zapfen (55), die mit Löchern (64) der Scheibe (25) zusammenwirken, fest mit der Scheibe (25) verbunden ist.

6. Schwungrad nach Anspruch 4 oder 5, **dadurch gekennzeichnet, dass** der zweite Reibring (54) axial zwischen der Scheibe (25) und den elastischen Mitteln (3) angebracht ist.

7. Schwungrad nach Anspruch 6, **dadurch gekennzeichnet , dass** der zweite Reibring (54) der Wirkung einer axial wirkenden elastischen Scheibe (267) ausgesetzt ist, die sich auf einem ringförmigen Querrand (46) des ersten Reibrings (44) abstützt.

8. Schwungrad nach Anspruch 6, **dadurch gekennzeichnet , dass** der zweite Reibring (54) der Wirkung einer axial wirkenden elastischen Scheibe (158) ausgesetzt ist, die durch den Querrücksprung des Hysteresedeckels (150) gebildet wird.

9. Schwungrad nach Anspruch 4 oder 5, **dadurch gekennzeichnet, dass** der zweite Reibring (54) axial zwischen der Scheibe (25) und der ersten Masse (1) angebracht ist.

10. Schwungrad nach Anspruch 9, **dadurch gekennzeichnet , dass** der zweite Reibring (54) der Wirkung einer elastischen Scheibe (167, 367) ausgesetzt ist, die sich auf die erste Masse (1) abstützt und axiale Finger (368) aufweist, die sich in den Durchgängen (79) der ersten Masse (1) erstrecken.

11. Schwungrad nach einem der Ansprüche 4 bis 10, **dadurch gekennzeichnet , dass** eine fest mit dem Außenumfang des Hysteresedeckels (50, 150) verbundene Stützscheibe (60, 160) axial so zwischen der ersten Masse (1) und den Reibmitteln (4) angeordnet ist, dass sie mit einer Reibfläche zum ersten Reibring (44) weist.

12. Schwungrad nach den Ansprüchen 9 und 11, **dadurch gekennzeichnet, dass** die elastische Scheibe (67), deren Wirkung der zweite Reibring (54) ausgesetzt ist, einen Teil der Stützscheibe (60) bildet.

13. Schwungrad nach einem der vorhergehenden Ansprüche, **dadurch gekennzeichnet , dass** die eine der Massen (1, 2) die zweite Masse (2) ist und die mindestens eine Reibfläche drehfest mit der ersten Masse (1) verbunden ist.

14. Schwungrad nach einem der vorhergehenden Ansprüche, **dadurch gekennzeichnet , dass** jeder Reibring (44, 54) durch eine Anlagescheibe (43, 53), die der Wirkung einer axial wirkenden elastischen Scheibe (42, 52) ausgesetzt ist, axial eingeklemmt werden kann.

15. Schwungrad nach Anspruch 14, **dadurch gekennzeichnet, dass** die Belastung der dem zweiten Reibring (54) zugeordneten elastischen Scheibe (52) geringer ist als die Belastung der dem ersten Reibring (44) zugeordneten elastischen Scheibe (42).

16. Schwungrad nach einem der vorhergehenden Ansprüche, **dadurch gekennzeichnet, dass** die Reibringe (44, 54) axial zwischen der ersten Masse (1) und den elastischen Mitteln (3) angeordnet sind.

17. Schwungrad nach einem der vorhergehenden Ansprüche, bei dem die beiden Massen (1, 2) mittels eines Lagers (5), das radial zwischen einer fest mit der ersten Masse (1) verbundenen Nabe (12) und einer Innenbohrung der zweiten Masse (2) angeordnet ist, beweglich bezüglich einander angebracht sind, **dadurch gekennzeichnet , dass** das Lager (5) radial innerhalb von Öffnungen (22) angebracht ist, die in der zweiten Masse zum Durchlassen von Werkzeugen zum Schrauben der Befestigungsschrauben, die der Befestigung des Dämpfungsschwungrands auf seiner Antriebswelle dienen, vorgesehen sind, und dass sich die Reibmittel (4) radial außerhalb der Befestigungsschrauben (31) erstrecken.

## Claims

1. A damping flywheel, especially for motor vehicles, comprising two coaxial masses (1, 2) which are mounted for movement of one with respect to the other against the action of, firstly, resilient means (3) comprising a resilient member (34) which acts in a generally radial direction between the said masses, and which is articulated on each of the latter, and secondly, axially acting friction means (4), wherein one (1) of the masses (1, 2), referred to as the first mass, is adapted to be mounted for rotation on a driving shaft, while the other one (2) of the masses (1, 2), referred to as the second mass, constitutes the reaction plate of a clutch, the friction means (4) being arranged axially between the two masses (1, 2), and having at least one friction ring (44) referred to as the first friction ring, which is adapted to be driven in rotation, optionally with a clearance being taken up, by one of the first and second masses (1, 2), and being further arranged to cooperate frictionally with at least one friction face which is rotatable with the other one of the first and second masses (2, 1), the said at least one resilient member (34) being articulated on the first mass (1) by means of a first pivot pin (6) and on the second mass (2) by means of a second pivot pin (7), the friction means (4) having a second friction ring (54) which is disposed transversely, generally in line with the first friction ring (44), with meshing means (29, 39, 25) acting in rotation between the first friction ring (44) and the second friction ring (54), with the second friction ring being adapted to cooperate frictionally with at least one friction face which is fixed with respect to the other one of the first and second masses.

2. A flywheel according to Claim 1, **characterised by** the fact that the first friction ring (44) drives the second friction ring (54) in rotation by virtue of meshing means (29, 39) carried in facing relationship by the first friction ring (44) and second friction ring (54).

3. A flywheel according to Claim 1 or Claim 2, wherein the resilient means (3) are articulated on the second mass (2) by means of a second pivot pin (7) carried by the second mass (2), **characterised by** the fact that the said second pivot pins (7) are fixed on a generally transversely oriented annular ring, and by the fact that the annular ring (25) has at its outer periphery a set of teeth (65) which are separated from each other by notches in which there are received radially oriented internal drive lugs (45) of the first friction ring (44).

4. A flywheel according to Claim 3, **characterised by** the fact that the second friction ring (54) is mounted radially inwards of the first friction ring (44), while a hysteresis cover piece (50, 150), fixed with respect to the first mass (1) and circumferentially surrounding the first friction ring (44), has a transverse return portion on which the associated axially acting resilient ring (42) is arranged to bear, the latter acting on the first friction ring (44) through the associated application ring (43) which carries lugs at its outer periphery, for cooperation of these lugs with teeth (56) of the hysteresis cover piece (50, 150).

5. A flywheel according to Claim 4, **characterised by** the fact that the second friction ring (54) is fixed with respect to the said annular ring (25) by means of axial studs (55) which cooperate with holes (64) in the annular ring (25).

6. A flywheel according to Claim 4 or Claim 5, **characterised by** the fact that the second friction ring (54) is disposed radially between the said annular ring (25) and the resilient means (3).

7. A flywheel according to Claim 6, **characterised by** the fact that the second friction ring (54) is subjected to the action of an axially acting resilient ring (267) which bears on a transverse annular flange (46) of the first friction ring (44).

8. A flywheel according to Claim 6, **characterised by** the fact that the second friction ring (54) is subjected to the action of an axially acting resilient ring (158), which consists of the transverse return portion of the hysteresis cover piece (150).

9. A flywheel according to Claim 4 or Claim 5, **characterised by** the fact that the second friction ring (54) is disposed axially between the said annular ring (25) and the first mass (1).

10. A flywheel according to Claim 9, **characterised by** the fact that the second friction ring (54) is subjected to the action of a resilient ring (167, 367) which bears on the first mass (1) and which has axial fingers (368) extending into passages (79) in the first mass (1).

11. A flywheel according to any one of Claims 4 to 10, **characterised by** the fact that a support ring (60, 160), which is secured through its outer periphery to the hysteresis cover piece (50, 150), is located axially between the first mass (1) and the first friction means (4), so as to offer a friction face to the first friction ring (44).

12. A flywheel according to Claims 9 and 11, **characterised by** the fact that the resilient ring (67) which acts on the second friction ring (54) is part of the support ring (60).

13. A flywheel according to any one of the preceding Claims, **characterised by** the fact that the said one of the masses (1, 2) is the second mass (2) and the said at least one friction face is rotatable with the first mass (1).

14. A flywheel according to any one of the preceding Claims, **characterised by** the fact that each friction ring (44, 54) is adapted to be clamped axially by an application ring (13, 53) on which a resilient ring (42, 52) acts in the axial direction.

15. A flywheel according to Claim 14, **characterised by** the fact that the force exerted by the resilient ring (52) associated with the second friction ring (54) is smaller than the force exerted by the resilient ring (42) associated with the first friction ring (44).

16. A flywheel according to any one of the preceding Claims, **characterised by** the fact that the friction rings (44, 54) are located axially between the first mass (1) and the resilient means (3).

17. A flywheel according to any one of the preceding Claims, wherein the two masses (1, 2) are mounted for movement of one with respect to the other, with the aid of a bearing (5) which is interposed radially between a hub (12) that is fixed with respect to the first mass (1), and an internal bore of the second mass (2), **characterised by** the fact that the bearing (5) is disposed radially inwards of the apertures (22) formed in the second mass for the passage through them of tools for screwing fastening screws adapted to fasten the damping flywheel on its driving shaft, and in that the friction means (4) lie radially outside the fastening screws (31).
